# EUROPÄISCHE PATENTSCHRIFT

(11) **EP 2 622 214 B1**
(45) Veröffentlichungstag und Bekanntmachung des Hinweises auf die Patenterteilung: **18.06.2014**
(21) Anmeldenummer: 11755007.9
(22) Anmeldetag: 30.08.2011
(51) Int. Cl.: F03D 7/02, F03D 7/04

(54) **VERFAHREN ZUR DREHZAHLANPASSUNG EINER WINDENERGIEANLAGE UND WINDENERGIEANLAGE**
METHOD FOR ADJUSTING THE ROTATIONAL SPEED OF A WIND TURBINE AND WIND TURBINE
PROCÉDÉ POUR L'ADAPTATION DE LA VITESSE DE ROTATION D'UNE INSTALLATION D'ÉNERGIE ÉOLIENNE ET INSTALLATION D'ÉNERGIE ÉOLIENNE

(30) Priorität: 28.09.2010 DE 102010041508
(43) Veröffentlichungstag der Anmeldung: 07.08.2013
(73) Patentinhaber: Senvion SE, 22297 Hamburg (DE)
(72) Erfinder: HANSEN, Marco, 25774 Groven (DE); WARFEN, Karsten, 23795 Söhren (DE)
(74) Vertreter: Seemann, Ralph
(86) Internationale Anmeldenummer: PCT/EP2011/004350
(87) Internationale Veröffentlichungsnummer: WO 2012/041430

(56) Entgegenhaltungen:
- EP-A1- 1 626 175
- EP-A1- 1 816 347
- EP-A2- 2 085 611
- WO-A1-01/77524

## Beschreibung

Die Erfindung betritt ein Verfahren zum Betreiben einer Windenergieanlage, wobei während des Betriebs Leistung von der Windenergieanlage abgegeben wird, wobei die Windenergieanlage drehzahlvariabel zwischen einer vorgebbaren Minimaldrehzahl und einer vorgebbaren Maximaldrehzahl betrieben wird, wobei eine charakteristische Größe einer Schwingung der Windenergieanlage oder eines Teils der Windenergieanlage erfasst wird. Die Erfindung betrifft ferner eine Windenergieanlage mit einem Turm und einem Rotor, wobei ein Generator vorgesehen ist, der drehzahlvariabel betreibbar ist, wobei eine Steuer- oder Regelvorrichtung vorgesehen ist, die bei einem Leistung abgebenden Betrieb der Windenergieanlage zur Steuerung- oder Regelung der Drehzahl des Rotors zwischen einer Minimaldrehzahl und einer Maximaldrehzahl ausgebildet ist und wobei außerdem ein Sensor zur Erfassung einer charakteristischen Größe einer Schwingung der Windenergieanlage oder eines Teils der Windenergieanlage vorgesehen ist.

Bei drehzahlvariabel betriebenen Windenergieanlagen liegt bei der unteren Betriebsdrehzahl, die auch als Minimaldrehzahl bezeichnet werden kann, sehr häufig eine Rotoranregende dicht an einer Turmeigenfrequenz, was unter ungünstigen Randbedingungen zu Resonanzschwingungen führen kann. Üblicherweise wird zur Vermeidung dieser Resonanzschwingungen die Turmeigenfrequenz durch Messung bestimmt und der Drehzahlbereich der Windenergieanlage so eingestellt, dass unter allen Bedingungen ein Betrieb mit ausreichend niedrigem Schwingungsniveau gewährleistet ist. Hierzu wird die zulässige Minimaldrehzahl häufig so festgelegt, dass die Anregende 5% bis 10% oberhalb der Turmfrequenz liegt. Dies führt allerdings zu Ertragseinbußen, weil der Drehzahlbereich eingeschränkt ist und der Rotor somit auch nur in einem eingeschränkten Windgeschwindigkeitsbereich mit optimaler Drehzahl und somit optimalem Wirkungsgrad betrieben werden kann.

WO 01/77524 A1 offenbart eine turmeigenfrequenzabhängige Betriebsführung von Offshore-Windenergieanlagen, bei der die jeweiligen kritischen Eigenfrequenzen der Anlage und/oder von Anlagenteilen bestimmt werden, wobei der Drehzahlbereich des Rotors, in dem eine Erregung der Gesamtanlage und/oder einzelner Anlagenteile im Bereich der kritischen Eigenfrequenzen erfolgen, bestimmt wird, wobei die Windenergieanlage nur unterhalb und oberhalb des kritischen Drehzahlbereichs unter schnellem Durchfahren des kritischen Drehzahlbereichs betrieben wird.

EP 1 816 347 A1 offenbart eine Windenergieanlage, die so gesteuert wird, dass bei Auftreten einer Schwingung Komponenten der Windenergieanlage so angesteuert werden, dass diese gegen die Schwingungsanregung wirken.

Es ist Aufgabe der vorliegenden Erfindung, eine Verbesserung des Betriebsverhaltens bei drehzahlvariablen Windenergieanlagen, insbesondere in Bezug auf den Energieertrag, das Schwingungsverhalten und die Lebensdauer zu ermöglichen.

Gelöst wird diese Aufgabe durch ein Verfahren zum Betreiben einer Windenergieanlage, wobei während des Betriebs Leistung von der Windenergieanlage abgegeben wird, wobei die Windenergieanlage drehzahlvariabel zwischen einer vorgebbaren Minimaldrehzahl und einer vorgebbaren Maximaldrehzahl betrieben wird, wobei eine charakteristische Größe einer Schwingung der Windenergieanlage oder eines Teils der Windenergieanlage erfasst wird, das dadurch weitergebildet ist, dass die Minimaldrehzahl in Abhängigkeit der charakteristischen Größe der Schwingung verändert wird.

Das Verändern und insbesondere das Anheben der Minimaldrehzahl, also der unteren Drehzahlgrenze in Abhängigkeit von der gemessenen Schwingung, also insbesondere in Abhängigkeit von der Schwingungsamplitude, der Frequenz, der Phase oder allgemein dem Schwingungsniveau, verhindert somit effizient bei Auftreten einer Schwingung, dass sich die Schwingung weiter vergrößert bzw. weiter ausbreitet. Die charakteristische Größe einer Schwingung ist vorzugsweise eine Schwingungsamplitude, eine Schwingungsfrequenz, eine Schwingungsphase und/oder eine Schwingungsrichtung. Ferner kann die charakteristische Größe der Schwingung vorzugsweise eine Beschleunigung der Windenergieanlage oder eines Teils der Windenergieanlage sein. Ein Teil der Windenergieanlage kann beispielsweise der Turm sein. Wenn Leistung von der Windenergieanlage abgegeben wird, bedeutet dieses erfindungsgemäß insbesondere, dass Strom in ein elektrisches Netz von der Windenergieanlage eingespeist wird, also dass die Windenergieanlage sich in einem Produktionsbetrieb befindet. Insbesondere ist hierunter nicht zu verstehen, dass die Windenergieanlage sich in einem Trudelbetrieb befindet. Tatsächlich muss eine Minimaldrehzahl erreicht sein, um effizient Leistung bzw. Strom abgeben zu können.

Vorzugsweise wird die Minimaldrehzahl kontinuierlich verändert, wenn ein vorgebbarer Grenzwert der charakteristischen Größe der Schwingung überschritten ist. Hierdurch wird erreicht, dass bei nur relevanten Schwingungen der Windenergieanlage die Minimaldrehzahl verändert wird. Unter kontinuierlich wird im Rahmen der Erfindung insbesondere zyklisch verstanden, beispielsweise kann das erfindungsgemäße Verfahren alle 5 bis 20 ms, insbesondere alle 10 ms, im Betrieb bzw. bei Abgabe von Leistung durch die Windenergieanlage ausgeführt werden.

Vorzugsweise wird die Minimaldrehzahl beim Auftreten einer entsprechend großen Schwingung, also einer Schwingung, bei der die charakteristische Größe der Schwingung einen vorgebbaren Grenzwert überschreitet, erhöht. Bei Abklingen der Schwingung kann dann die Minimaldrehzahl wieder verringert werden. Vorzugsweise erfolgt hierbei eine Steigerung bzw. Erhöhung der Minimaldrehzahl mit einer größeren Steigung als eine Verringerung der Minimaldrehzahl. Hiermit ist insbesondere der Betrag der Steigung zu verstehen. Damit wird einer Schwingung mit einer kürzeren Reaktionszeit durch schnelle Erhöhung der Minimaldrehzahl entgegengewirkt als die Absenkung der Minimaldrehzahl bei der Reduzierung des Schwingungsniveaus bzw. der Schwingung erfolgt. Vorzugsweise wird die Minimaldrehzahl durch Vorgabe eines Generatormoments oder eine Generatorleistung geregelt oder gesteuert. Die Minimaldrehzahl wird so durch Vorgabe des Generatormoments oder der Generatorleistung eingehalten.

Vorzugsweise wird insbesondere für die Verarbeitung der charakteristischen Größe der Schwingung diese nach der Erfassung begrenzt. Die Begrenzung dient dazu, bei der Verarbeitung des gemessenen Signals eine Übersättigung zu vermeiden. Vorzugsweise wird die charakteristische Größe der Schwingung in eine Kennlinie eingegeben, wobei der Ausgang der Kennlinie eine Drehzahldifferenz ist. Insbesondere vorzugsweise wird die Amplitude der Schwingung und/oder die Beschleunigung der Windenergieanlage oder eines Teils der Windenergieanlage als Eingang eines Kennlinienbausteins verwendet, wobei der Ausgang des Kennlinienbausteins eben die Drehzahldifferenz ist. Die Drehzahldifferenz wird dann noch vorzugsweise über ein Zeitglied, beispielsweise ein PT1-Glied verzögert. Dieses Signal wird dann mit der Minimaldrehzahl und ggf. der aktuellen Minimaldrehzahl aufaddiert, um als Eingang für den Anlagenregler bzw. die Betriebsführung zu dienen. Das erfindungsgemäße Verfahren kann allerdings auch in dem Anlagenregler bzw. der Anlagensteuer- oder -regelvorrichtung bzw. der Betriebsführung ausgeführt werden.

Die Einhaltung einer Minimaldrehzahl kann im Teillastbereich durch Einstellung des Generatormoments gesteuert oder geregelt werden. Ist die Drehzahl zu niedrig, wird von der Steuer- oder Regelvorrichtung das Generatormoment abgesenkt, so dass die Rotordrehzahl zunimmt. Die Absenkung des Generatormoments erfolgt über eine Steuerung bzw. Regelung eines Umrichters, der die elektrischen Parameter des Generators über im Stand der Technik an sich bekannte Verfahren einstellt. Hierzu werden allerdings im Rahmen der Figurenbeschreibung nähere Erläuterungen vorgenommen.

Die Aufgabe wird ferner durch eine Windenergieanlage mit einem Turm und einem Rotor, wobei ein Generator vorgesehen ist, der drehzahlvariabel betreibbar ist, wobei eine Steuer- oder Regelvorrichtung vorgesehen ist, die bei einem Leistung abgebenden Betrieb der Windenergieanlage zur Steuerung- oder Regelung der Drehzahl des Rotors zwischen einer Minimaldrehzahl und einer Maximaldrehzahl ausgebildet ist und wobei außerdem ein Sensor zur Erfassung einer charakteristischen Größe einer Schwingung der Windenergieanlage oder eines Teils der Windenergieanlage vorgesehen ist, gelöst, die dadurch weitergebildet ist, dass die Minimaldrehzahl in Abhängigkeit von der charakteristischen Größe der Schwingung veränderbar ist oder verändert wird.

Vorzugsweise ist oder wird die charakteristische Größe durch die Steuer- oder Regelvorrichtung verändert bzw. ist diese Größe durch die Steuer- oder Regelvorrichtung veränderbar. Die Steuer- oder Regelvorrichtung beinhaltet bzw. umfasst dann beispielsweise ein Computerprogrammprodukt bzw. einen Algorithmus, mittels dessen das erfindungsgemäße Verfahren durchgeführt werden kann. Das erfindungsgemäße Verfahren kann allerdings auch in einer Betriebsführung der Windenergieanlage integriert sein.

Vorzugsweise ist der Sensor ein Beschleunigungssensor oder ein Dehnmessstreifen. Der Beschleunigungssensor oder der Dehnmessstreifen kann im oberen Bereich des Turms oder auf einem Maschinenhaus der Windenergieanlage, in einem mittleren Bereich des Turms und/oder im Fußbereich des Turms angeordnet sein, um verschiedene Schwingungen bzw. verschiedene Schwingungsmodi der Windenergieanlage bzw. von Teilen der Windenergieanlage zu erfassen.

Vorzugsweise umfasst die Steuer- oder Regelvorrichtung eine Rampe, die bei der Erhöhung der Minimaldrehzahl eine größere Steigerung als bei der Verringerung der Minimaldrehzahl aufweist. Vorzugsweise wird die Einhaltung der Minimaldrehzahl durch Vorgabe eines Generatormoments oder einer Generatorleistung gesteuert oder geregelt. Wenn vorzugsweise die Steuer- oder Regelvorrichtung einen Begrenzer für die erfasste charakteristische Größe der Schwingung aufweist, wird eine Übersättigung der Steuer- oder Regelvorrichtung vermieden. Vorzugsweise umfasst die Steuer- oder Regelvorrichtung auch einen Kennlinienbaustein, der eine Kennlinie umfasst, bei der als Eingangsgröße die gemessene charakteristische Größe bzw. eine verarbeitete charakteristische Größe wie beispielsweise eine Beschleunigung vorgesehen ist und als Ausgangsgröße eine Drehzahldifferenz bzw. ein Drehzahl-Offset. Vorzugsweise weist die Steuer- oder Regelvorrichtung ein Verzögerungsglied auf. Das Verzögerungsglied kann beispielsweise ein Tiefpass sein bzw. ein Zeitglied. Hierbei kann ein PT1-Glied beispielsweise als Tiefpass Verwendung finden.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht einer Windenergieanlage,
- Fig. 2: eine schematische Darstellung einer erfindungsgemäßen Windenergieanlage und
- Fig. 3: eine schematische Darstellung einer Steuer- oder Regelvorrichtung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

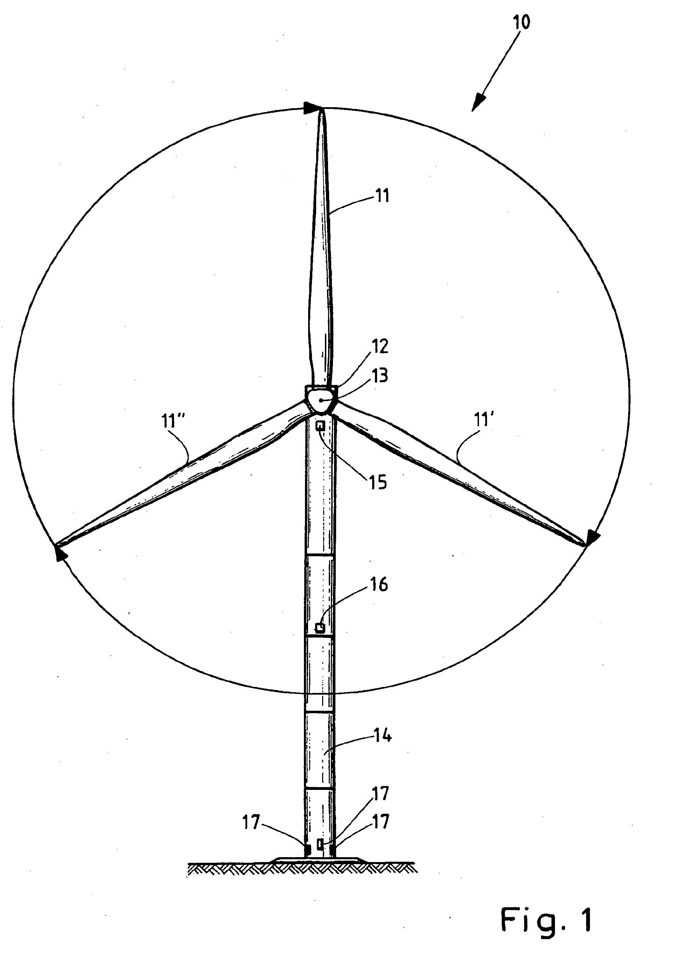

Fig. 1 zeigt schematisch eine Windenergieanlage 10 mit einem Rotor 13, der drei Rotorblätter 11, 11' und 11" umfasst, die in Pfeilrichtung umlaufend ausgebildet sind. Der Rotor 13 sitzt an einem Maschinenhaus 12 oberhalb eines Turms 14. Es sind Sensoren 15, 16 und 17 vorgesehen, die eine Schwingung bzw. ein Schwingungsniveau des Turms bzw. der Windenergieanlage erfassen können. Hierbei kann es sich beispielsweise um Beschleunigungssensoren handeln oder aber auch um Dehnmessstreifen. Vorzugsweise werden Dehnmessstreifen im Bereich des Turmfußes beim Sensor 17 angeordnet und Beschleunigungssensoren in der Mitte bei 16 und im oberen Bereich des Turms 14 bei 15. Es können auf der jeweiligen Höhe auch mehrere Sensoren sinnvollerweise verwendet werden, beispielsweise drei, vier oder mehr Sensoren, die Schwingungen in verschiedenen Richtungen erfassen können.

Es kann mittels eines Sensors oder mehrerer Sensoren beispielsweise eine Turmschwingung erfasst werden, die in Richtung der vorliegenden Rotorachsrichtung ist, also in die Zeichenebene der Fig. 1 hinein und heraus. Eine Schwingungsanregung erfolgt hierbei beispielsweise bei niedriger Rotordrehzahl dann, wenn die so genannte "3p-Frequenz", also die Blattdurchgangsfrequenz dicht an der ersten Turmbiegeeigenfrequenz liegt. Ebenso kann die Erfindung auch sinnvoll eingesetzt werden, wenn die Rotordrehfrequenz (die so genannte "1p-Frequenz") zu dicht an einer Turmeigenfrequenz liegt. Da in diesem Fall die Anregung oft aus einer Massen oder aerodynamischen Unwucht herrührt, wird in diesem Beispiel die Turmschwingung bevorzugt in einer Richtung senkrecht zur vorliegenden Rotorachsrichtung erfasst, d.h. in Fig. 1 in der Zeichenebene. Es handelt sich dann um eine Erfassung der lateralen Schwingung.

Im Fall einer zweiten Turmbiegeeigenfrequenz ist es sinnvoll, den Sensor in der Mitte des Turms 14 in der Position 16 anzuordnen. Wie erwähnt können auch Dehnmessstreifen im Turmfuß zur Erfassung von Schwingungen in der ersten oder in einer höheren Eigenfrequenz genutzt werden. Bevorzugt werden mindestens drei oder vier Sensoren über den Turmumfang verteilt, um abhängig von der Windrichtung die Schwingung in Rotorachsrichtung oder bei der alternativen Ausführung senkrecht dazu erfassen zu können.

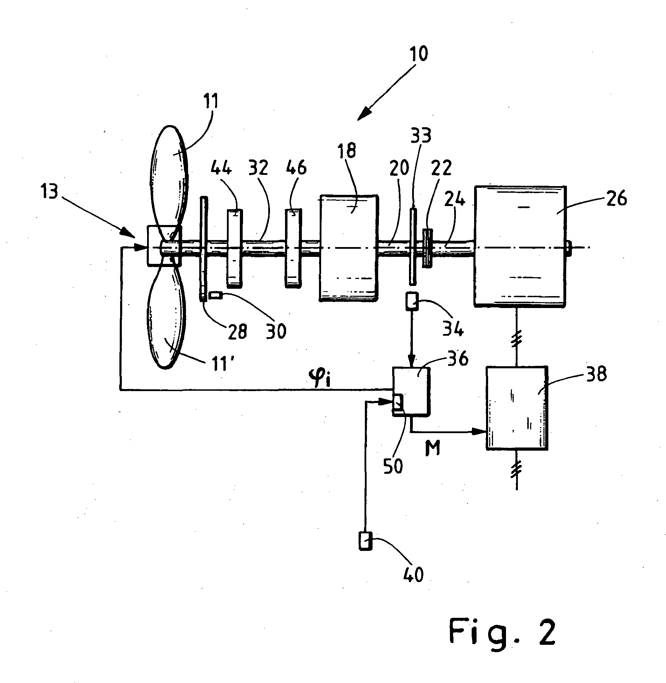

Fig. 2 zeigt schematisch eine erfindungsgemäße Windenergieanlage 10 mit entsprechenden Komponenten bzw. Teilen der Windenergieanlage. Es ist ein Rotorblatt 11 und ein Rotorblatt 11' des Rotors 13 dargestellt. In dem Fall, in dem der Rotor sich bewegt, bewegt sich auch die Welle 32 in den Lagern 44 und 46, entsprechend dann auch die Arretierscheibe 28, in deren Umgebung ein Sensor 30 angeordnet ist, um die Drehzahl der langsamen Welle 32 zu bestimmen. Über ein Getriebe 18 ist eine Ausgangswelle 20 mit einer schnellen Welle 24 über eine Kupplung 22 verbunden, wobei die Welle 24 den Rotor des Drehstromgenerators 26 antreibt. An der Ausgangswelle 20 ist eine Geberscheibe 33 angeordnet, in deren Nachbarschaft auch ein Drehzahlsensor 34 angeordnet ist.

Die gemessene Drehzahl des Drehzahlsensors 34 wird in die Steuer- oder Regelvorrichtung 36 eingebracht, mittels der beispielsweise ein Vorgabewinkel ϕi für die Rotorblätter 11 und 11' zur Einstellung des Rotorblattwinkels bzw. Pitchwinkels generiert wird. Die über den Sensor 30 bestimmte Drehzahl kann alternativ oder ergänzend der Steuer- oder Regelvorrichtung zugeführt werden.

Zudem wird ein Drehmoment M durch die Steuer- oder Regelvorrichtung vorgegeben, das einem Umrichter 38 zugeleitet wird. Diese Steuer- oder Regelvorrichtung 36 gibt ein Momenten-Stellsignal M auf einen Umrichter 38 für den vom Generator 26 erzeugten Wechselstrom. Der Umrichter erzeugt Wechselstrom mit entsprechenden vorgebbaren Parametern zwecks Einspeisung in ein Netz. Mit Hilfe einer lastoptimierten Regelung des Umrichters 38 ist es möglich, eine elektronische Schwingungsdämpfung für den Triebstrang zu realisieren. Auch hierfür ist eine genaue Erfassung der Drehzahl am Triebstrang erforderlich.

Die Steuer- oder Regelvorrichtung umfasst ein Anpassungsmodul 50, über das die Minimaldrehzahl des Rotors bzw. der Welle 20 bzw. der Welle 24 angepasst werden kann. Das Anpassungsmodul 50 kann auch getrennt von der Steuer- oder Regelvorrichtung vorgesehen sein. Im Rahmen der Erfindung beinhaltet allerdings die Formulierung, dass durch die Steuer- oder Regelvorrichtung die Minimaldrehzahl in Abhängigkeit von der charakteristischen Größe der Schwingung veränderbar ist oder verändert wird, dass dieses auch durch ein Anpassungsmodul, das Bestandteil der Steuer- oder Regelvorrichtung sein kann und damit integral mit der Steuer- oder Regelvorrichtung ist, geschehen kann. Dieses kann auch durch ein entsprechendes Anpassungsmodul, das nicht integral mit der Steuer- oder Regelvorrichtung vorgesehen ist und somit räumlich getrennt von der eigentlichen Steuer- oder Regelvorrichtung vorliegt, geschehen. Im Rahmen der Erfindung umfasst dann die Steuer- oder Regelvorrichtung auch dieses an sich getrennt von der Steueroder Regelvorrichtung angeordnete Anpassungsmodul.

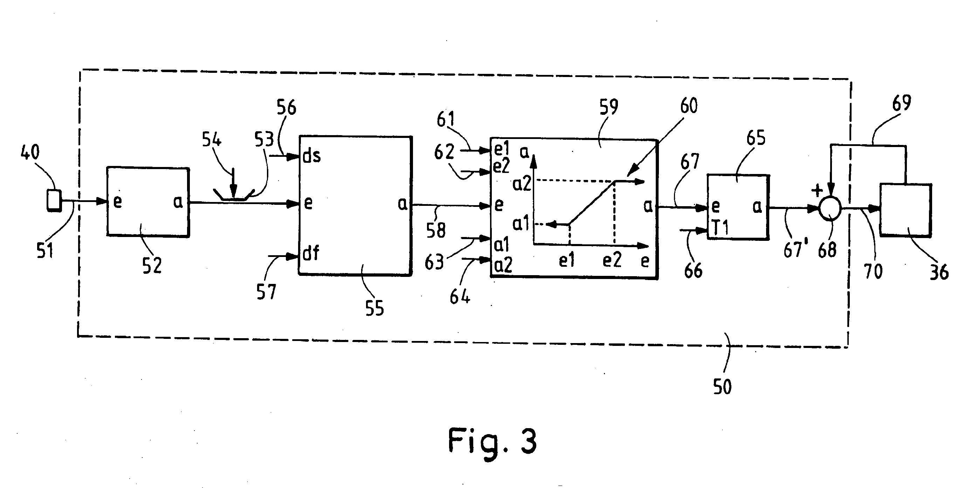

Eine charakteristische Größe einer Schwingung der Windenergieanlage oder eines Teils einer Windenergieanlage wird durch den Sensor 40, der beispielsweise ein Beschleunigungssensor sein kann, der in Fig. 1 mit 15, 16 oder 17 bezeichnet ist, gemessen. Der Sensor ist mit dem Anpassungsmodul 50 bzw. der Steuer- oder Regelvorrichtung 36 verbunden. Das Signal dient dann, wie im Zusammenhang mit Fig. 3 näher erläutert wird, zur Anpassung bzw. Veränderung der Minimaldrehzahl in Abhängigkeit der charakteristischen Größe der Schwingung.

In Fig. 3 sind schematisch eine erfindungsgemäße Steuer- oder Regelvorrichtung umfassend ein Anpassungsmodul 50 und eine Steuer- oder Regelvorrichtung 36 dargestellt. Ein Eingangssignal, das ein Beschleunigungssignal 51 ist, wird durch einen Beschleunigungssensor 40 beim Eingang e des Gleichrichters 50 eingespeist. Im Gleichrichter 52 wird das Beschleunigungssignal gleichgerichtet, so dass sich ein Absolutwert ergibt. Die gemessene Turmbeschleunigung wird überwiegend sinusartig sein, so dass es für die Weiterverarbeitung sinnvoll ist, einen Absolutwert zu erhalten. Als Ausgang a wird also ein Absolutwert eines Beschleunigungssignals weiterverarbeitet. Hierzu wird in einem Begrenzer 53 der Absolutwert begrenzt, beispielsweise auf einen Parameter von 50 mG (Milligravitationsbeschleunigung). Es wird dann ein gleichgerichtetes Beschleunigungssignal dem Eingang e des Rampenbausteins 55 zur Verfügung gestellt. Als Parameter für den Rampenbaustein sind beispielsweise +20 mG/s für ds vorgesehen, also für eine steigende Rampe und als Parameter für eine fallende Rampe df -0,03 mG/s.

Der Rampenbaustein 55 kann so ausgestaltet sein, dass die folgende Bedingung erfüllt ist: für e-a<df gilt a=a+df, ansonsten (für e-a>ds gilt a=a+ds ansonsten a=e). Dieses Ergebnis wird dann als Beschleunigungswert 58 vom Ausgang a des Rampenbausteins 55 zum Eingang e des Kennlinienbaustein 59 gegeben. Der Kennlinienbaustein 59 hat als vorgebbare Parameter e1 (61), e2 (62), a1 (63) und a2 (64), wobei e1 z.B. 25 mG sein kann und e2 z.B. 50 mG und a1 0 rpm sowie a2 80 rpm oder auch 50 rpm.

Das Ausgangssignal a des Rampenbausteins 59, also nach Anwendung des Eingangssignals e auf die Kennlinie 60 ergibt eine Drehzahldifferenz 67, die nach Durchlaufen durch einen Tiefpass 65 als Drehzahl-Offset 67' angegeben wird. Der Tiefpass 65 kann als PT1-Glied mit P=1 ausgebildet sein mit einem eingebbaren bzw. vorgebbaren Parameter 66 von T1, also beispielsweise einer Zeit von 10 s. Der Drehzahl-Offset 67' wird dann auf die Minimaldrehzahl 69 bzw. den Drehzahlminimalwert 69 im Addierer 68 aufaddiert und als aktualisierter Minimaldrehzahlsollwert der Steuer- oder Regelvorrichtung 36 zur Verfügung gestellt bzw. in einer Steuer- oder Regelvorrichtung, die sowohl die Steuer- oder Regelvorrichtung 36 als auch das Anpassungsmodul 50 umfasst, weiterverarbeitet. Mit diesem Wert 70, also dem aktualisierten Minimaldrehzahlsollwert wird dann die drehzahlvariable Windenergieanlage weiter betrieben, so dass eine Minimaldrehzahl bei einer Schwingung der Windenergieanlage erzielt wird, die sich erhöht, so dass die Anregungsfrequenz der Schwingung verlassen wird und sich die Schwingung wieder reduziert. Mit Anregungsfrequenz wird im Rahmen dieser Anmeldung insbesondere eine Frequenz bezeichnet, die so dicht an einer Eigenfrequenz eines Teils der Windenergieanlage liegt, dass die Windenergieanlage zu einer unerwünschten Schwingung mit der Eigenfrequenz angeregt wird.

Durch die Begrenzung des Messsignals in dem Begrenzer 53 wird vermieden, dass im Rampenbaustein 55 ein Sättigungseffekt stattfindet. Der Rampenbaustein 55 dient zur schnellen Annahme von Beschleunigungszunahmen und einer langsamen Reduzierung der maximalen Amplituden. Zudem wird hierdurch auch eine Filterwirkung, beispielsweise für EMV-Störungen, erzielt. Die langsame Reduzierung, beispielsweise mit der fallenden Rampe von -0,03 mG/s führt zu einer langsamen Abnahme der Drehzahldifferenz 67 bzw. des Drehzahl-Offsets 67'. Das bedeutet für den Anlagenregler quasi ein statischer Zustand und dient zur Anlagenberuhigung. Durch diese asymmetrische Rampengestaltung wird ein sicheres Betriebsverfahren bereitgestellt. Damit nutzt der Anlagenregler das Windangebot optimal aus.

Der Kennlinienbaustein 59 gibt bei Beschleunigungen unter e1 ein Drehzahl-Offset bzw. eine Drehzahldifferenz 67 von 0 rpm aus. Bei Beschleunigungen über e2 wird eine Drehzahldifferenz 67 von beispielsweise 80 rpm bei einer Windenergieanlage mit einer Nenndrehzahl von z.B. 1800 rpm herausgegeben. Zwischen den Beschleunigungsparametern wird die Drehzahldifferenz entsprechend der aufgetretenen Beschleunigung in diesem Ausführungsbeispiel linear angepasst. Es können auch andere Anpassungen anstelle der linearen Anpassung vorgenommen werden. Vorzugsweise findet in einer realen Umsetzung eine Anpassung des Drehzahlparameters nicht in rpm statt, sondern in % auf Nenndrehzahl bezogen, um so anlagenunabhängig und netzfrequenzneutral, d.h. insbesondere auf 50 Hz und 60 Hz-Generatoren mit unterschiedlicher Nenndrehzahl anwendbar, zu sein.

Der Tiefpass 65, der in diesem Ausführungsbeispiel als PT1-Glied ausgebildet ist, dient zur Anstiegsbegrenzung bei spontaner Beschleunigungszunahme, also einer schonenden Sollwertänderung für die Steuer- oder Regelvorrichtung bzw. für die Windenergieanlage. Bei den langsam fallenden Beschleunigungswerten hat der Tiefpassfilter allerdings kaum eine Wirkung. Anschließend wird beim Addierer 68 der Drehzahl-Offset 67' auf den ursprünglichen Sollwert für die Getriebedrehzahl aufaddiert.

Der Rampenbaustein 55 und der Kennlinienbaustein 59 können im Rahmen der Erfindung auch in umgekehrter Reihenfolge angeordnet werden, sodass zunächst im Kennlinienbaustein die Beschleunigung in ein Drehzahlsignal gewandelt wird und die Rampenfunktion dann auf dem Drehzahlniveau angewendet wird. Das Vorgehen wird analog der obigen Beschreibung ausgeführt, allerdings mit der umgekehrten Reihenfolge der Bausteine.

Die erfindungsgemäße Lösung zeichnet sich durch eine harte Kopplung der Beschleunigung mit dem Drehzahl-Offset aus, wodurch das Verfahren sehr robust ist. Das Verfahren kann in jedem Betriebszustand angewandt werden, auch bei Nenndrehzahl. Es hat bei Nenndrehzahl allerdings praktisch keine Wirkung. Ist der Wind allerdings stark böig und nimmt schlagartig ab, ist unter Umständen die Minimaldrehzahl zunächst einmal erhöht, was aus zuvor turbulenten Bedingungen mit signifikanten Turmbeschleunigungen auch zur Turmentlastung sinnvoll ist. Das erfindungsgemäße Verfahren hebt die minimale Drehzahl nur so stark an wie nötig, damit die Anlage nicht mit Turmschwingungen ausfällt. Auf diese Weise wird die Leistungskurve im unteren Drehzahlbereich nur gering beeinflusst. Außerdem wird die minimale Drehzahl nur dann angehoben, wenn die Turmbeschleunigung signifikante Werte annimmt. Welche Werte signifikant sind, kann vorgegeben werden. Insbesondere bei kleinen Türmen mit bspw. weniger als 70 m Nabenhöhe, insbesondere bei einer 2 MW-Anlage, sind temporär auffällig viele Turmschwingungen bei wenig Wind vorgekommen. Dieses kann beispielsweise durch eine ungünstige Anströmung oder Schwingungseffekte mit einem Kabelloop entstehen. Das erfindungsgemäße Verfahren wird in diesen Situationen wirksam, um die 3P-Anregung zu dämpfen und eine Abschaltung zu vermeiden. Das erfindungsgemäße Verfahren kann immer zyklisch laufen, also kontinuierlich, und ist so nicht von unterschiedlichen Betriebszuständen abhängig. Kontinuierlich bedeutet insbesondere, dass das erfindungsgemäße Verfahren zyklisch beispielsweise alle 10 ms durchgeführt werden kann. Bei Beschleunigungen unter dem Parameter e1 des Rampenbausteins 59 wird eine Drehzahldifferenz 67 von 0 rpm ausgegeben. Damit handelt es sich um einen Normalbetrieb.

Alternativ kann das Verfahren auch nur in einem vorbestimmten Drehzahlbereich eingesetzt werden, insbesondere nur im unteren Drehzahlbereich der Windenergieanlage, beispielsweise unterhalb einer vorbestimmten Grenzdrehzahl oder unterhalb einer vorbestimmten Grenzleistung oder eines anderen, mit der Drehzahl korrelierten Parameters (z.B. Windgeschwindigkeit). Somit wird vermieden, dass bei Sturm im Betrieb mit relativ hohen Drehzahlen die Minimal-Drehzahl erhöht wird, da evtl. auftretende große Beschleunigungen nicht auf die Nähe zur Turmresonanz sondern auf den hohen Energiegehalt von Windböen im Sturm zurückzuführen sind. Wird in diesem Betriebsbereich das Verfahren ausgesetzt, so hat dies den Vorteil, dass der Rotor bei evtl. Negativböen ausreichend stark in der Drehzahl reduziert werden kann, um weiterhin im energetischen Optimalpunkt betrieben werden zu können. Somit wird der Energieertrag gesteigert.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Windenergieanlage
- 11, 11', 11": Rotorblatt
- 12: Maschinenhaus
- 13: Rotor
- 14: Turm
- 15: Sensor
- 16: Sensor
- 17: Sensor
- 18: Getriebe
- 20: Ausgangswelle
- 22: Kupplung
- 24: Welle
- 26: Drehstromgenerator
- 28: Arretierscheibe
- 30: Sensor
- 32: Welle
- 33: Geberscheibe
- 34: Sensor
- 36: Steuer- oder Regelvorrichtung
- 38: Umrichter
- 40: Sensor
- 44: Lager
- 46: Lager
- 50: Anpassungsmodul
- 51: Beschleunigungssignal
- 52: Gleichrichter
- 53: Begrenzer
- 54: vorgebbarer Wert
- 55: Rampenbaustein
- 56: Parameter steigende Rampe
- 57: Parameter fallende Rampe
- 58: Beschleunigungswert
- 59: Kennlinienbaustein
- 60: Kennlinie
- 61-64: Parameter
- 65: Tiefpass
- 66: Parameter
- 67: Drehzahldifferenz
- 67': Drehzahl-Offset
- 68: Addierer
- 69: Drehzahlminimalwert
- 70: aktualisierter Minimaldrehzahlsollwert
- M: Generatormoment
- e: Eingangsgröße
- a: Ausgangsgröße

## Patentansprüche

1. Verfahren zum Betreiben einer Windenergieanlage (10), wobei während des Betriebs Leistung von der Windenergieanlage (10) abgegeben wird, wobei die Windenergieanlage (10) drehzahlvariabel zwischen einer vorgebbaren Minimaldrehzahl und einer vorgebbaren Maximaldrehzahl betrieben wird, wobei eine charakteristische Größe (51) einer Schwingung der Windenergieanlage (10) oder eines Teils der Windenergieanlage (10) erfasst wird, **dadurch gekennzeichnet, dass** die Minimaldrehzahl in Abhängigkeit der charakteristischen Größe (51) der Schwingung verändert wird.

2. Verfahren nach Anspruch 1, **dadurch gekennzeichnet, dass** die Minimaldrehzahl kontinuierlich verändert wird, wenn ein vorgebbarerer Grenzwert der charakteristischen Größe (51) der Schwingung überschritten ist.

3. Verfahren nach Anspruch 1 oder 2, **dadurch gekennzeichnet, dass** eine Steigerung der Minimaldrehzahl mit einer größeren Steigung erfolgt als eine Verringerung der Minimaldrehzahl.

4. Verfahren nach einem der Ansprüche 1 bis 3, **dadurch gekennzeichnet, dass** die charakteristische Größe (51) der Schwingung die Amplitude, die Richtung, die Frequenz und/oder die Phase der Schwingung und/oder die Beschleunigung der Windenergieanlage (10) oder eines Teils der Windenergieanlage (10) beinhaltet.

5. Verfahren nach einem der Ansprüche 1 bis 4, **dadurch gekennzeichnet, dass** die Minimaldrehzahl durch Vorgabe eines Generatormomentes (M) oder einer Generatorleistung geregelt oder gesteuert wird.

6. Verfahren nach einem der Ansprüche 1 bis 5, **dadurch gekennzeichnet, dass** die charakteristische Größe (51) der Schwingung nach der Erfassung begrenzt wird.

7. Verfahren nach einem der Ansprüche 1 bis 6, **dadurch gekennzeichnet, dass** die charakteristische Größe (51) der Schwingung in eine Kennlinie (60) eingegeben wird, wobei der Ausgang der Kennlinie (60) eine Drehzahldifferenz (67) ist.

8. Windenergieanlage (10) mit einem Turm (14) und einem Rotor (13), wobei ein Generator (26) vorgesehen ist, der drehzahlvariabel betreibbar ist, wobei eine Steuer- oder Regelvorrichtung (36, 50) vorgesehen ist, die bei einem Leistung abgebenden Betrieb der Windenergieanlage (10) zur Steuerung oder Regelung der Drehzahl des Rotors (13) zwischen einer Minimaldrehzahl und einer Maximaldrehzahl ausgebildet ist und wobei außerdem ein Sensor (40) zur Erfassung einer charakteristischen Größe (51) einer Schwingung der Windenergieanlage (10) oder eines Teils der Windenergieanlage (10) vorgesehen ist, **dadurch gekennzeichnet, dass** die Minimaldrehzahl in Abhängigkeit von der charakteristischen Größe (51) der Schwingung veränderbar ist oder verändert wird.

9. Windenergieanlage (10) nach Anspruch 8, **dadurch gekennzeichnet, dass** die Minimaldrehzahl durch die Steuer- oder Regelvorrichtung (36, 50) veränderbar ist oder verändert wird.

10. Windenergieanlage (10) nach Anspruch 8 oder 9, **dadurch gekennzeichnet, dass** der Sensor (51) ein Beschleunigungssensor oder ein Dehnmessstreifen ist.

11. Windenergieanlage (10) nach Anspruch 9 oder 10 **dadurch gekennzeichnet, dass** die Steuer- oder Regelvorrichtung (36, 50) eine Rampe (55) umfasst, die bei der Erhöhung der Minimaldrehzahl eine größere Steigerung als bei der Verringerung der Minimaldrehzahl aufweist.

12. Windenergieanlage (10) nach einem der Ansprüche 8 bis 11, **dadurch gekennzeichnet, dass** die Einhaltung der Minimaldrehzahl durch Vorgabe eines Generatormoments (M) oder einer Generatorleistung gesteuert oder geregelt wird.

13. Windenergieanlage (10) nach einem der Ansprüche 9 bis 12, **dadurch gekennzeichnet, dass** die Steuer- oder Regelvorrichtung (36, 50) einen Begrenzer (53) für die erfasste charakteristische Größe (51) der Schwingung aufweist.

14. Windenergieanlage (10) nach einem der Ansprüche 9 bis 13, **dadurch gekennzeichnet, dass** die Steuer- oder Regelvorrichtung (36, 50) ein Verzögerungsglied (65) aufweist.

## Claims

1. A method of operating a wind turbine (10), wherein power is supplied by the wind turbine (10) during operation, wherein the wind turbine (10) is operated at a variable speed between a pre-determinable minimum speed and a pre-determinable maximum speed, wherein a characteristic parameter (51) of an oscillation of the wind turbine (10) or a portion of the wind turbine (10) is detected, **characterised in that** the minimum speed is altered in dependence on the characteristic parameter (51) of the oscillation.

2. A method as claimed in claim 1, **characterised in that** the minimum speed is continuously altered when the characteristic parameter (51) of the oscillation exceeds a pre-determinable threshold value.

3. A method as claimed in claim 1 or 2, **characterised in that** an increase of the minimum speed occurs at a greater rate than a reduction of the minimum speed.

4. A method as claimed in one of claims 1 to 3, **characterised in that** the characteristic parameter (51) of the oscillation includes the amplitude, the direction, the frequency and/or the phase of the oscillation and/or the acceleration of the wind turbine (10) or of a portion of the wind turbine (10).

5. A method as claimed in one of claims 1 to 4, **characterised in that** the minimum speed is regulated or controlled by the input of a generator moment (M) or a generator power.

6. A method as claimed in one of claims 1 to 5, **characterised in that** the characteristic parameter of the oscillation is limited after the detection.

7. A method as claimed in one of claims 1 to 6, **characterised in that** the characteristic parameter (51) of the oscillation is input into a curve (60) wherein the output of the curve (60) is a speed difference (67).

8. A wind turbine (10) with a tower (14) and a rotor (13), wherein a generator (26) is provided, which is operable at a variable speed, wherein a control or regulating device (36, 50) is provided, which is constructed to control or regulate the speed of the rotor (13) between a minimum speed and a maximum speed in operation of the wind turbine (10), in which it delivers power, and wherein further a sensor (40) is provided for detecting a characteristic parameter (51) of an oscillation of the wind turbine (10) or a portion of the wind turbine (10), **characterised in that** the minimum speed is alterable or altered in dependence on the characteristic parameter (51) of the oscillation.

9. A wind turbine (10) as claimed in claim 8, characterised that the minimum speed is alterable or is altered by the control or regulating device (36, 50).

10. A wind turbine (10) as claimed in claim 8 or 9, **characterised in that** the sensor (51) is an acceleration sensor or a strain gauge.

11. A wind turbine (10) as claimed in claim 9 or 10, **characterised in that** the control or regulating device (36, 50) includes a ramp (55), which has a greater increase when increasing the minimum speed than when reducing the minimum speed.

12. A wind turbine (10) as claimed in one of claims 8 to 11, **characterised in that** the maintenance of the minimum speed is controlled or regulating by inputting a generator moment (M) or a generator power.

13. A wind turbine (10) as claimed in one of claims 9 to 12, **characterised in that** the control or regulating device (36, 50) has a limiter (53) for the detected characteristic parameter (51) of the oscillation.

14. A wind turbine (10) as claimed in one of claims 9 to 13, **characterised in that** the control or regulating device (36, 50) has a delay element (65).

## Revendications

1. Procédé de fonctionnement d'une éolienne (10), dans lequel l'éolienne (10) est déchargée, dans lequel l'éolienne (10) est une éolienne à vitesse variable fonctionnant entre une vitesse minimale prédéterminée et une vitesse maximale prédéterminée, dans lequel une grandeur caractéristique (51) de la vibration de l'éolienne (10) ou d'une partie de l'éolienne (10) est détectée, **caractérisé en ce que** la vitesse minimale est modifiée en fonction de la grandeur caractéristique (51) de la vibration.

2. Procédé selon la revendication 1, **caractérisé en ce que** la vitesse minimale est continuellement modifiée lorsqu'une valeur seuil de la grandeur caractéristique (51) est supérieure à la vibration.

3. Procédé selon la revendication 1 ou la revendication 2, **caractérisé en ce qu'**une réduction de la vitesse minimale produit une augmentation de la vitesse minimale avec une plus grande pente.

4. Procédé selon l'une des revendications 1 à 3, **caractérisé en ce que** la grandeur caractéristique (51) de la vibration comprend l'amplitude, la direction, la fréquence et / ou la phase de la vibration et / ou l'accélération de l'éolienne (10) ou une partie de la éolienne (10).

5. Procédé selon l'une quelconque des revendications 1 à 4, **caractérisé en ce que** la vitesse minimale est régulée en réglant un couple de générateur (M) ou la puissance du générateur.

6. Procédé selon l'une des revendications 1 à 5, **caractérisé en ce que** la grandeur caractéristique (51) est limitée après la détection de la vibration.

7. Procédé selon l'une des revendications 1 à 6, **caractérisé en ce que** la grandeur caractéristique (51) de la variation est représentée par une courbe caractéristique (60), dans lequel le résultat de la courbe caractéristique (60) est une différence de vitesse de rotation (67).

8. Eolienne (10) comportant une tour (14), un rotor (13) et un générateur (26), l'éolienne étant un dispositif à vitesse variable, dans laquelle un dispositif de commande ou de régulation (36, 50) est prévu pour réguler la puissance de fonctionnement de l'éolienne (10) et commander ou réguler la vitesse de rotation du rotor (13) entre une vitesse minimale et une vitesse de rotation maximale et dans laquelle en outre un capteur (40) destiné à détecter une grandeur caractéristique (51) de la vibration de l'éolienne (10) ou d'une partie de l'éolienne (10) est prévu, **caractérisée en ce que** la vitesse minimale, en fonction de la grandeur caractéristique (51) de la vibration peut être modifiée ou changée.

9. Eolienne (10) selon la revendication 8, **caractérisée en ce que** la vitesse minimale est déterminée par le dispositif de commande ou de régulation (36, 50) et peut être modifiée.

10. Eolienne (10) selon la revendication 8 ou la revendication 9, **caractérisée en ce que** le capteur (51) est un capteur d'accélération ou une jauge de contrainte.

11. Eolienne (10) selon la revendication 9 ou la revendication 10, **caractérisée en ce que** le dispositif de commande ou de régulation (36, 50) comprend une rampe (55) ayant une exécution plus rapide pour l'augmentation de la vitesse minimale que pour la réduction de la vitesse minimale.

12. Eolienne (10) selon l'une quelconque des revendications 8 à 11, **caractérisée en ce que** le respect de la vitesse minimale est commandé ou régulé en réglant un couple de générateur (M) ou la puissance du générateur.

13. Eolienne (10) selon l'une quelconque des revendications 9 à 12, **caractérisée en ce que** le dispositif de commande ou de régulation (36, 50) comprend un limiteur (53) pour la détection de la grandeur caractéristique détectée (51) de la vibration.

14. Eolienne (10) selon l'une quelconque des revendications 9 à 13, **caractérisée en ce que** le dispositif de commande ou de régulation (36, 50) comprend un retardateur (65).
